# EUROPEAN PATENT APPLICATION

(11) **EP 1 679 115 A1**
(43) Date of publication of application: **12.07.2006**
(21) Application number: 05290046.1
(22) Date of filing: 07.01.2005
(51) Int. Cl.: B01J 19/00

(54) **High performance microreactor**

(71) Applicant: Corning Incorporated, Corning, New York 14831 (US)
(72) Inventor: Guermeur, Céline, 77590 Chartrettes (FR); Caze, Philippe, 77300 Fontainebleau (FR); Woehl, Pierre, 77240 Cesson (FR); Nedelec, Yann, 77210 Avon (FR); Themont, Jean-Pierre, 77690 Montigny-sur-Loing (FR)
(74) Representative: Le Roux, Martine

(57) **Abstract**

A microfluidic reaction device (10) includes a thermal buffer fluid passage (16) and a reactant passage (22) having mixing and dwell time sub-passages all defined within an extended body, the dwell-time sub-passage having at least 1 ml volume, and the mixing sub-passage being in the form of a unitary mixer not requiring precise splitting of flows to provide good mixing. The device is desirably formed in glass or glass-ceramic. The unitary mixer is structured to generate secondary flows in the reactant fluid and is preferably closely thermally coupled to the buffer fluid passage by sharing one or more common walls.

## Description

### BACKGROUND OF THE INVENTION

### FIELD OF THE INVENTION

The present invention relates generally to microreaction devices, defined herein as devices having internal channels or chambers of millimeter to submillimeter dimension for conducting mixing and chemical reactions, and more particularly, to such devices particularly optimized for achieving well controlled continuous operation of exothermic reactions at relatively high throughput rates.

### TECHNICAL BACKGROUND

Microreaction technology, broadly understood, involves chemical and biological reaction devices having intentionally structured features, such as flow passages and the like, with one or more dimensions in the millimeter, or typically submillimeter or micron scales.

One current focus for such technology is on providing the means to perform many reactions simultaneously for high-throughput chemical or biological screening. The extremely small dimensions and volumes typically involved allow relatively inexpensive, quick testing with multiple hundreds or even multiple thousands of tests in parallel.

Another focus for microreaction technology is on utilizing the high surface to volume ratios possible in small channels―orders of magnitude greater than typical batch reactors―to provide advantages in chemical lab work, processing and production. Devices with very high surface to volume ratios have the potential to provide very high heat and mass transfer rates within very small volumes. Well-recognized potential advantages include (1) higher productivity and efficiency through higher yield and purity, (2) improved safety through dramatically reduced process volumes, (3) access to new processes, new reactions, or new reaction regimes not otherwise accessible, which may in turn provide even greater yield or safety benefits. Advantage is also sought in the potential of "numbering up" rather than "scaling up" from laboratory to commercial production. "Numbering up"―increasing capacity by arranging increasing numbers of microreaction structures in parallel, whether "internally" within a single microreaction device or "externally" by arranging multiple devices in parallel, offers the potential of placing a laboratory-proven reaction essentially directly into production, without the significant costs, in time and other resources, of scaling up reactions and processes to typical production-plant-size reaction equipment.

Many types of micromixing devices have been reported or proposed. One type that may be referred to as "interdigitating" or "laminating" mixers relies on finely dividing and interleaving the flows of the reactants to be mixed in a typically massively parallel array, often followed by radial or linear "focusing" (i.e., narrowing) of the flow, thereby allowing for very fast diffusion-driven mixing. A relatively recent example is the "SuperFocus" mixer developed by Mikroglas Chemtech GmbH in conjunction with Institut für Mikrotechnik Mainz (IMM) and discussed in Hessel, et al., "Laminar Mixing in Different Interdigital Micromixers" AIChE J. 49, 3 (2003) 566-577, 578-84, in which flows to be mixed are interdigitated in an essentially planar geometry. IMM has also developed very high throughput stacked-plate micromixers known as "star laminators" in which fluids are forced to flow between stacked patterned steel plates, typically into a central passage through the plate stack, having the effect of "interdigitating" the laminated flows in a three-dimensional geometry. Similarly high throughput in a massively parallel interdigitating mixer with three-dimensional geometry has been reported by the Institut für Mikroverfahrenstechnik at Forschungszentrum Karlsruhe (FZK).

A second type of micromixing device utilizes one or more simple mixing "tees" in which two straight channels are merged into one, such as the multiple mixer structures in another "microreactor" from Mikroglas Chemtech GmbH (in conjunction with Fraunhofer ICT) as reported, for instance, in Marioth et al., "Investigation of Microfluidics and Heat Transferability Inside a Microreactor Array Made of Glass," in IMRET 5: Proceedings of the Fifth International Conference on Microreaction Technology (Matlosz Ehrfeld Baselt Eds., Springer 2001).

A third type of micromixer utilizes small impinging jets, as for instance in Yang et al., "A rapid Micro-Mixer/Reactor Based on Arrays of Spatially Impinging Microjets," J. Micromech. Microeng. 14 (2004) 1345-1351.

A fourth type uses active mixing, such as magnetically actuated micro-stirrers, piezo-driven mixing, other acoustic energy driven mixing, or any other active manipulation of fluid(s) to be mixed.

A fifth type of micromixing device utilizes splitting and recombining of flows to generate serial (rather than massively parallel) multilamination of the flow. An example is the "caterpillar" type mixer shown for instance in Schönfeld et al., "An Optimized Split-and-Recombine Micro-Mixer with Uniform 'Chaotic' Mixing," Lab Chip 2004, 4, 69.

A sixth type uses varying channel surface features to induce secondary flows or "chaotic advection" within the fluid(s) to be mixed. Examples of mixers of this type include the structure reported in Strook et al., "Chaotic Mixer for Microchannels," Science 295 1 (2002) 647-651 (surface features inducing chaotic advection).

A seventh type of micromixing device uses varying channel geometry, such as varying shape, varying curvatures or directions of the channel, to induce secondary flows, turbulence-like effects, or "chaotic advection" within the fluid(s) to be mixed. Examples of this type include the structures reported in Jiang, et al., "Helical Flows and Chaotic Mixing in Curved Micro Channels," AIChE J. 50, 9 (2004) 2297-2305, and in Liu, et al., "Passive Mixing in a Three-Dimensional Serpentine Microchannel," J. Microelectromech. Syst. 9, 2 (2000) 190-197 (showing planar or two-dimensional and non-planar or three-dimensional serpentine channels, respectively, for inducing "chaotic" mixing).

Various types of microreactors have also been reported or proposed. Microreactors, as the term is most commonly used, are microreaction devices providing for both reacting of one or more reactants (typically including mixing of two or more reactants) and for some degree of reaction control via heating or cooling or thermal buffering. Illustrative examples include the Mikroglas microreactor reported in Marioth et al., supra, a glass device utilizing multiple "tee" mixers in parallel; the "FAMOS" system microreaction units from Fraunhofer, with examples reported in Keoschkerjan et al., "Novel Multifunction Microreaction Unit for Chemical Engineering," Chem. Eng. J 101 (2004) 469-475, utilizing various mixer geometries; the "Cytos" microreactor from Cellular Process Chemistry (CPC) such as shown in Figures 10-12 of U.S. Patent Application Publication 2003/0223909 A1, utilizing a stacked plate architecture including passages for heat exchange fluid, and another type of stacked plate architecture from IMM as described in Richeter, et al., "A Flexible Multi-Component Microreaction System for Liquid Phase Reactions," Proceedings of IMRET 3, 636-634 (Springer Verlag 2000). The massively parallel, high-throughput three-dimensionally interdigitating mixers such as those from IMM and FZK mentioned above can also be connected to an immediately following massively parallel high-throughput heat exchanger to form a high-throughput microreaction system.

Much of the current effort in "microreaction technology," whether for mixers or complete microreactor devices, and even the currently proposed definition of the term itself, focuses on the expected benefits obtainable from microflows within devices designed or selected "based on 'process design' in a unit cell" and utilizing "a multitude of such cells" to provide "tailored processing equipment at the micro-flow scale," to the exclusion of larger-dimensioned continuous-flow reactors that fit the broader, more traditional definition. See, e.g, Hessel, Hardt and Löwe, Chemical Micro Process Engineering (Wiley VCH, 2004), pp. 5-6; 18-19.

This focus stems both from the desire to control fluid processes through use of predictable and orderly micro-flows and from the desire to achieve increased throughput within a single device. As stated in Hessel, Hardt and Löwe, supra, "Usually, even with zigzag mixing channels or chaotic mixers, liquid micro mixing can only be completed at moderate volume flows. In chemical process technology, throughput is often an important issue, and for this reason micro mixer designs going beyond the concept of two streams merging in a single channel are needed. When abandoning mixer architectures where the fluid streams to be mixed are guided through only a single layer and going to multilayer architectures, the principle of multilamination becomes accessible ...."

The finely divided, highly parallel structures which are the subject of such efforts do offer potential advantages, such as the possibility of very fast mixing with very low pressure drop in mixers, and of very fast, very high heat exchange rates in heat exchangers, effectively providing for increased throughput by internal "numbering up." Yet such very fine structures can also be particularly prone to clogging or fouling in the presence of particulates or film-forming materials, and once clogged or fouled, such structures may be irreparable, or may require laborious disassembly and cleaning. Further, performance of such devices is quite sensitive to the balance of flows in split-flow channels, such that design or manufacturing difficulties can result in lower than expected or lower than desired mixing quality or yields. Mixing quality can also be very difficult to preserve as a device ages, since any imbalances in flow will tend to be magnified over time by differential erosion of the highest-throughput channels. Further, high-throughput, very fast mixers (using three-dimensional multi-lamination) even when closely coupled to fast, high-throughput heat exchangers, have often not produced hoped-for levels of yield or productivity increases relative to more traditional processes.

Accordingly, it would be desirable to produce a device that would avoid these drawbacks while simultaneously providing comparably good mixing at comparatively low pressure drop, with good heat exchange capability and high throughput.

### SUMMARY OF THE INVENTION

The present invention relates to a microreaction device for the mixing and reaction of one or more fluid or fluid-borne reactants. The device includes integrated thermal management capability in the form of one or more high-flow buffer fluid passages or layers. The device includes a unitary mixer, i.e., a mixing passage through which all of at least one reactant to be mixed is made to pass, the mixing passage being structured so as to generate secondary flows or turbulence-like effects to promote mixing. As such, the mixing passage is desirably of three-dimensionally serpentine form, and may include periodic or aperiodic obstacles, restrictions, or similar features. The device also includes an integrated dwell-time passage through which fluid flows after initial mixing in the mixing passage and before leaving the device. The dwell-time passage preferably has having a significantly lower pressure drop to volume ratio than the mixing passage, desirably at least about five times lower. The dwell time passage preferably has a volume of at least 1 ml and may desirably be even larger, such as 2, 5, or even 10 ml, desirably having sufficient volume to allow fluid leaving the mixing passage at a desired flow rates to remain for sufficient time in the device such that the reaction in process is sufficiently stabilized or complete that passage of the reaction fluid out of the device through a fluid coupling or fitting does not unduly reduce reaction yield or productivity. The dwell time passage and the unitary mixing passage are closely thermally coupled to the one or more buffer fluid passages so as to allow fast removal of excess heat. The secondary flows generated in the mixing passage cooperate with the associated closely-coupled high-flow buffer fluid passage to prevent hot spots from forming in the mixing passage, and to increase the thermal transfer capability of the device, especially during and immediately after mixing, resulting in improved reaction control and selectivity. The reactant passages may desirably be contained within a very thin volume, with ratio of dimension in the thin direction to the next smallest dimension on the order of 1:100, with buffer fluid layers or passages provided on either side of this thin volume. The device further desirably has chemically inert or highly resistant surfaces in the mixing and dwell time passages. To that end, the device may desirably be formed directly in a chemically inert or highly resistant material, such as glass, ceramic, glass-ceramic, chemically resistant polymers, chemically resistant metals and the like.

As a result these and other features, the inventive device can and preferably does provide heat exchange capability of at least 20 watts, or more preferably of at least 40 watts from a reactant stream flowing at 20ml/min, and a total dwell-time of at least 6-10 seconds at that 20 ml/min flow rate (corresponding to a dwell-time passage volume of 2 to about 3.33 ml), with at least 90% fast mixing performance at flow rates from at least as low as 20 ml/min and up. Further, the inventive device can and preferably does provide low pressure drop of less than about 2 bar, desirably even less than about 1 bar, at flow rates as high as about 100ml/min or even more. Surprisingly, embodiments of the inventive device, a device which includes thermal buffering capability and an integrated dwell time passage of at least 1 ml volume, offer fast mixing and low pressure drop performance equal to or better than existing planar-configuration interdigitating mixers that include neither.
Tests of the class of devices disclosed herein have allowed users to conduct high yield, well controlled, continuous autocatalytic nitration of activated aromatics, reactions in which autocatalysis would typically cause runaway thermal buildup with resulting uncontrolled reactions. Such tests have also shown capability provided by the inventive devices to thermally influence to a significant degree the relative yields of desirable products.

### BRIEF DESCRIPTION OF THE DRAWINGS

Figure 1 is a cross-sectional elevational view showing microfluidic device structures of the type which may be used in a microreaction device according to the present invention.

Figure 2 is the cross-sectional plan view of the embodiment of Figure 1 in a visually simplified form for clarity of explanation, with reactant flow passages highlighted.

Figure 3 is the view of Figure 2 with pre-mixing passages highlighted.

Figure 4 is the view of Figure 2 with mixing passage highlighted.

Figure 5 is the view of Figure 2 with dwell time passage highlighted.

Figure 6 is an elevational cross-sectional view of a type of structure that may be used to form devices according to the present invention.

Figure 7 is an elevational cross-section view of another type of structure that may be used to form devices according to the present invention.

Figure 8 is a plan view cross section of another portion of the embodiment of Figure 1.

Figure 9 shows schematic representations of the cross-sectional plan views of Figures 1 and 7 showing the relationship of the cross-sectional structures formed by the stacked assembly of the structures represented in Figures 1 and 7.

Figures 10A and 10B are respective enlarged cross-sectional plan views of a portion of the structures of Figures 7 and 1, respectively.

Figures 11 is an alternative embodiment of the structure of Figure 10B.

Figures 12 and 13 are plan cross-sectional views of buffer fluid passages or chambers as used in device of the embodiment of Figure 1.

Figure 14 is a plan cross-sectional view of an alternative embodiment of the structure of Figure 13.

Figure 15 is a graph of the tested mixing quality as a function of flow rate of the device of the embodiment of Figure 1 together with two comparison devices.

Figure 16 is a graph of the tested pressure drop as a function of flow rate of the device of the embodiment of Figure 1 together with three comparison devices.

Figure 17 is a graph of the total residence time for reaction fluids as a function of flow rate of the device of the embodiment of Figure 1, together with two comparison devices.

Figure 18 is a graph of tested mixing quality as a function of flow rate for devices subjected for various lengths of time to alkaline corrosion.

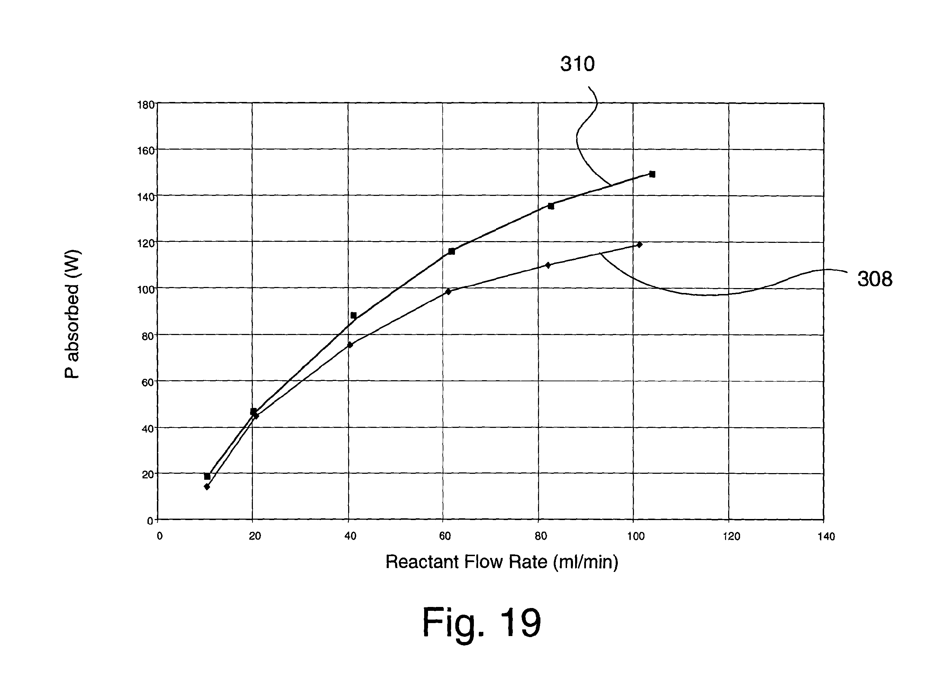

Figure 19 is a graph of power transferred between buffer fluid and reaction fluid passages as a function of reaction passage fluid flow rate.

### DETAILED DESCRIPTION OF THE PREFERRED EMBODIMENTS

Whenever possible, the same reference numerals will be used throughout the drawings to refer to the same or like parts.

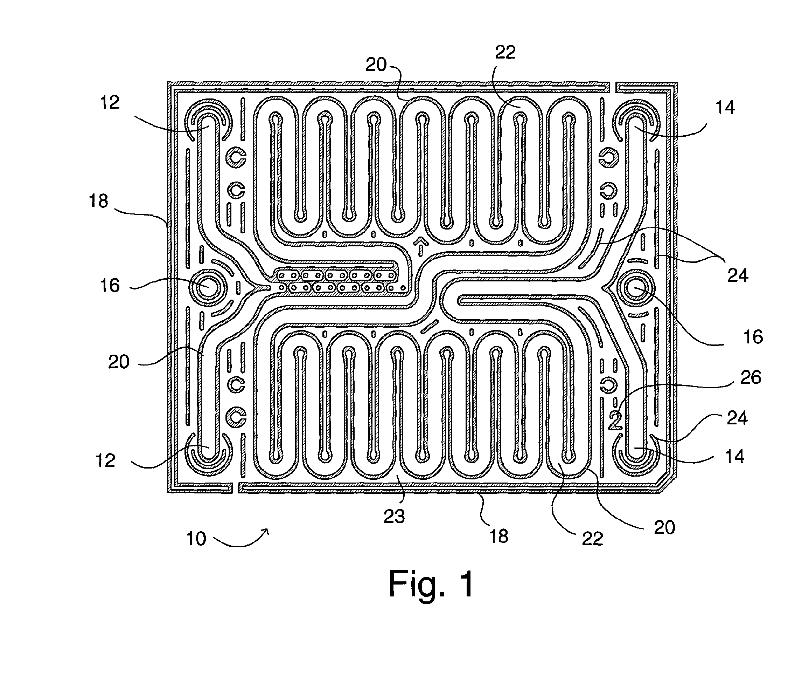

Figure 1 is a cross-sectional plan view of a portion of an embodiment of a microreaction device 10 according to the present invention. The structures shown in the cross-section include outer walls 18, fluid passage walls 20, as well as various reinforcing or supporting structures 24 and a layer identifying mark 26 useful in manufacturing. The fluid passage walls define reactant fluid passage(s) 22 and provide a gap 23 between walls of adjacent portions of the fluid passages 22. The walls and other structures shown in cross section are supported on a generally planar structure parallel to, but not in, the plane of the figure. The walls and other structures shown may be formed on the planar support structure by suitable additive or subtractive processes or may be formed integrally with the planar support structure, if desired. Holes are provided through the planar support structure at the locations 12, 14 and 16. The holes at locations 12 provide access for reactant streams entering the fluid passages 22, while the holes at locations 14 provide exit ports for fluid leaving the device. The holes at locations 16 provide a through-passage for a thermal buffer fluid.

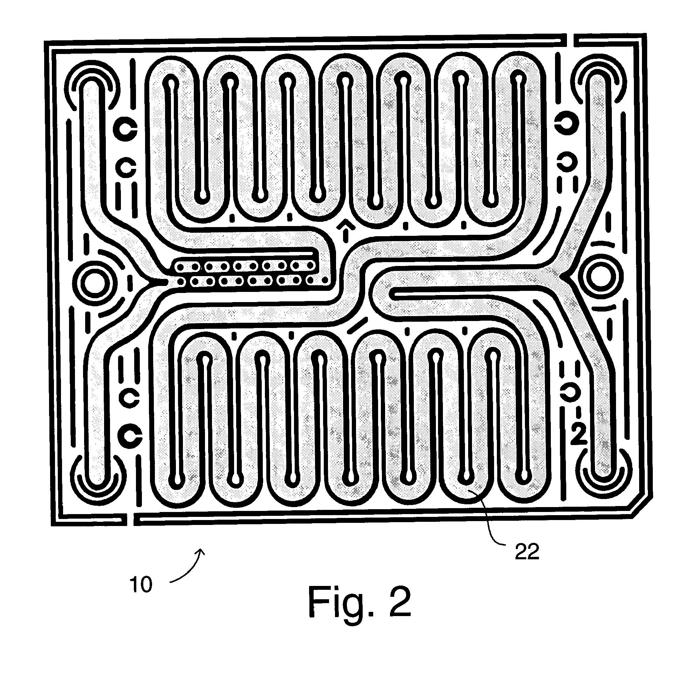

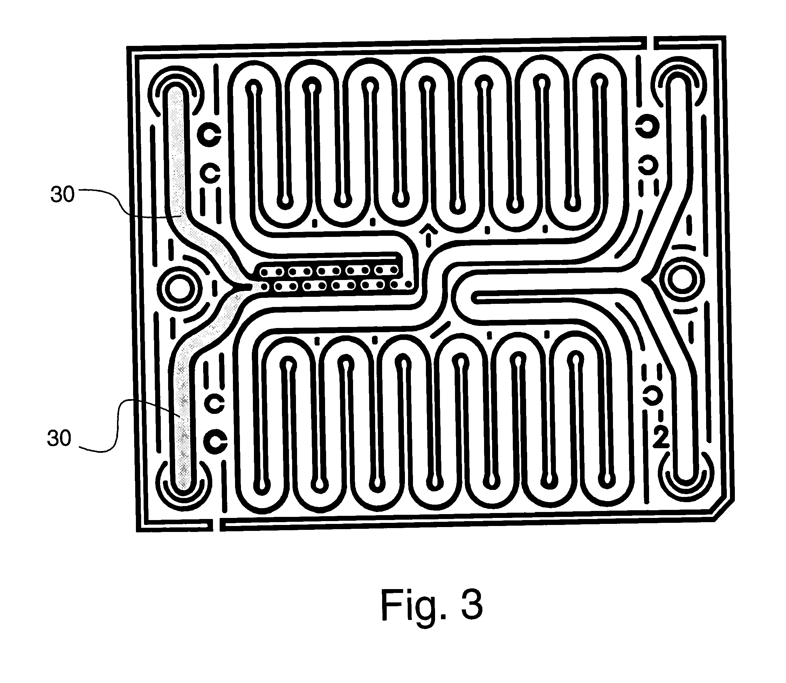

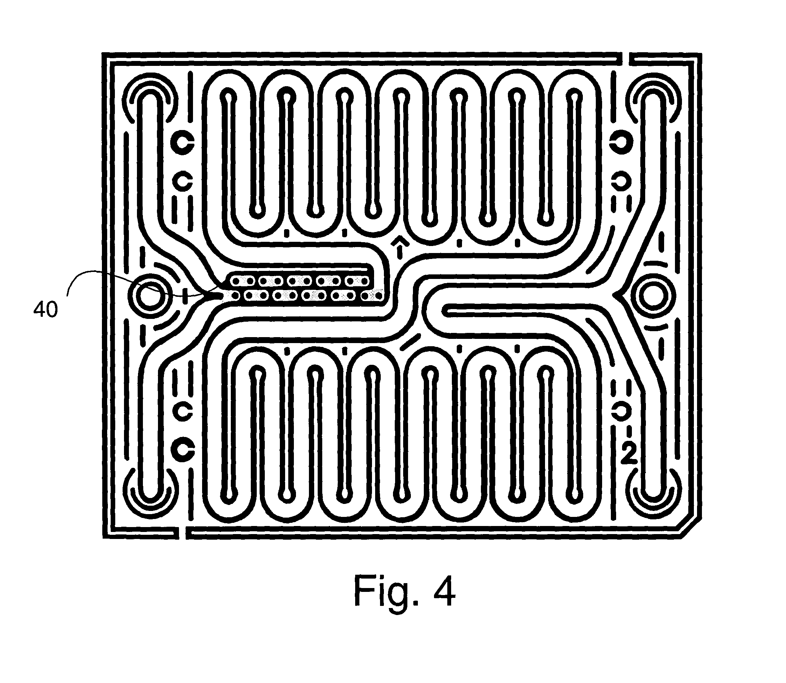

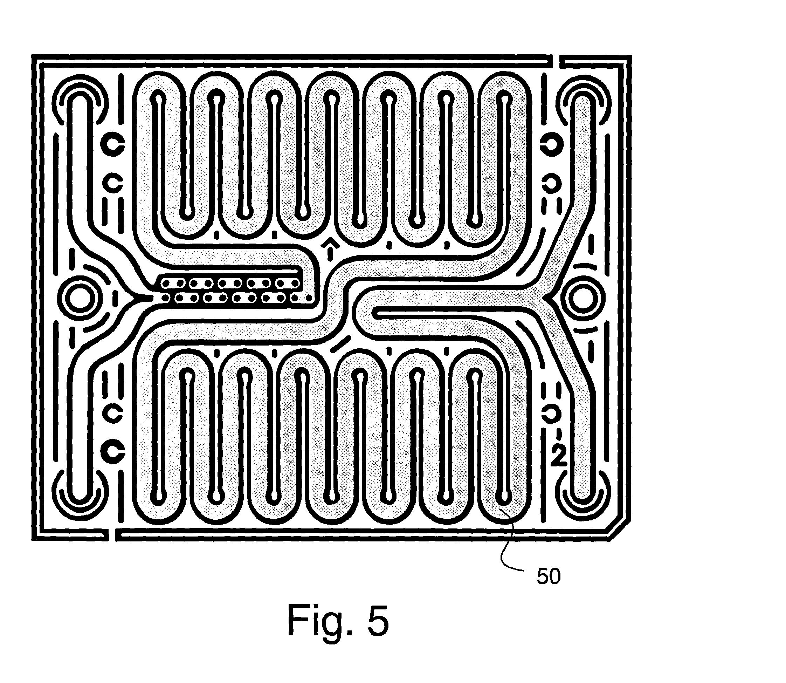

Figure 2 is the same cross-sectional view as in Figure 1, but with cross-sectional structures now represented by solid lines, and with the regions of fluid passage(s) 22 shaded, for clarity of illustration. The fluid passages 22 may be subdivided into functional sub-passages, including a pre-mixing sub-passage or sub-passages 30, a mixing sub-passage 40, and a dwell time sub-passage 50, as shown in Figures 3, 4 and 5, respectively. As represented in the figures, the boundaries between different functional sub-passages may overlap, and in fact the exact boundaries of sub-passages of different types need not be precisely delineated. Mixing sub-passage 40 is generally distinguishable, however, from the other sub-passages, and particularly from the dwell time sub-passage 50, by higher surface area to volume ratios, by higher pressure drop to volume ratios for a given flow rate, and by generally significantly smaller total volume or, when in use, by the generally greater generation of secondary flows or turbulence-like effects within the mixing sub-passage relative to such generation within the dwell time sub-passage.

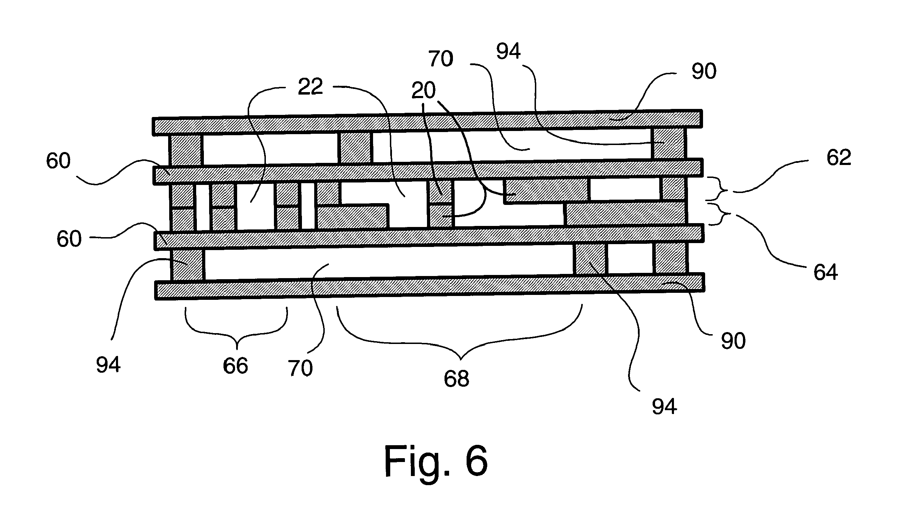

In the microreaction device of the embodiment of Figure 1, the fluid passage(s) 22 may desirably be confined between two generally planar structures 60 that support the fluid passage walls 20, as shown in a cross-sectional elevation of a generic representative structure in Figure 6. The reactant passages may be formed by the juxtaposition of two complementary sets of wall structures 62 and 64, with each set originally supported on one of the planar structures 60. The wall structures defining fluid passage 22 may be directly matching in certain locations, such as at location 66 in Figure 6. The wall structures defining fluid passage 22 are also non-matching in certain other locations, such as at location 68 in Figure 6, dividing the fluid passage 22 into two levels stacked in the vertical direction in the figure, when the structures are abutted and joined to form a microreaction device.

In one desirable embodiment and method of making the devices of the present invention, the device is comprised of glass or glass ceramic. For a device of glass, the planar structures 60 may comprise glass substrates and the walls and other similar structures may comprise sintered glass frit. One such suitable process, for instance, is that described in U.S. Patent No. 6,769,444, assigned to the present applicant.

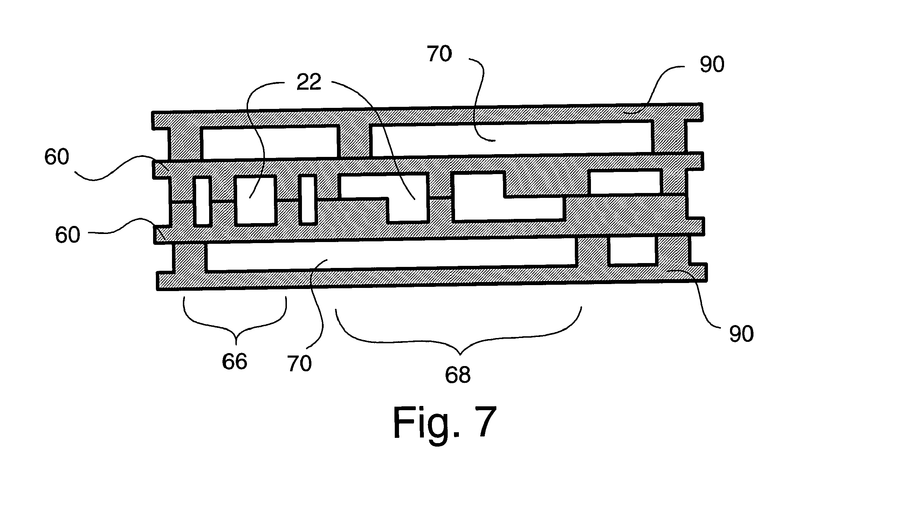

Devices of the present invention may also be formed in other materials, for instance, in metals, ceramics, and plastics, and by other methods, including micromaching, etching with or without lithographic methods, and others. In some cases, the wall structures may be formed directly out of the same unitary material that comprises the generally planar supporting structures, as shown in Figure 7, rather than as walls and related structures sandwiched between generally planar structures as shown in Figure 6. In either case, the final assembled structure of the device as a whole is desirably consolidated into one piece, such as by appropriate sintering or other suitable means, so that a gas- and liquid-tight final device is produced.

In devices of the present invention, fluid passages for reactant(s) within microreaction devices are closely associated with thermal buffer fluid layer(s) or passage(s). Desirably, the generally planar structures 60 enclosing the fluid passages 22 may themselves be sandwiched between two generally planar buffer fluid layers or passages 70, bounded by additional generally planar structures 90, as shown in Figures 6 and 7. The fluid passages 70 desirably have low pressure drop allowing for high flow rates of buffer fluid, generally at least 200 ml/min or more at a pressure drop of 1.5 bar, and desirably at least a twice greater flow at a given pressure than in the reactant fluid passages, most desirably at least five times as great.

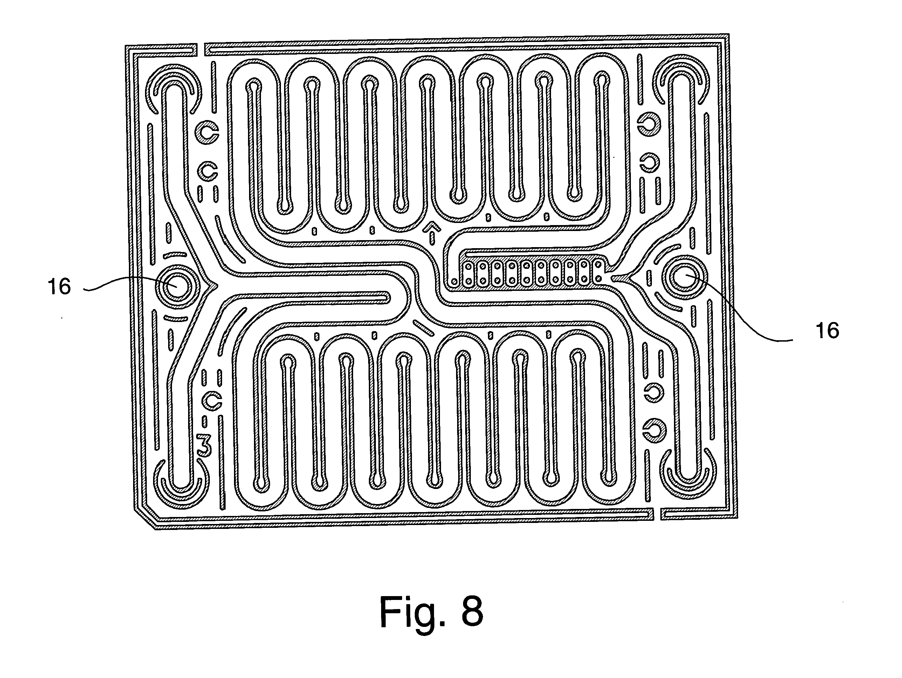

Figure 8 is a plan view cross section of a second structure of walls and related structures, complementary to the first such structures shown in Figure 1. In a planar structure associated with and supporting the walls and related structures shown in Figure 8, holes through the planar structure may be used in various locations, as desired, but are used in the illustrated embodiment only at the locations 16 for buffer fluid through-holes. In this particular embodiment, the wall structures shown in Figure 8 differ from the structures shown in Figure 1 primarily only in the area of the mixing sub-passage, as will be described in further detail below.

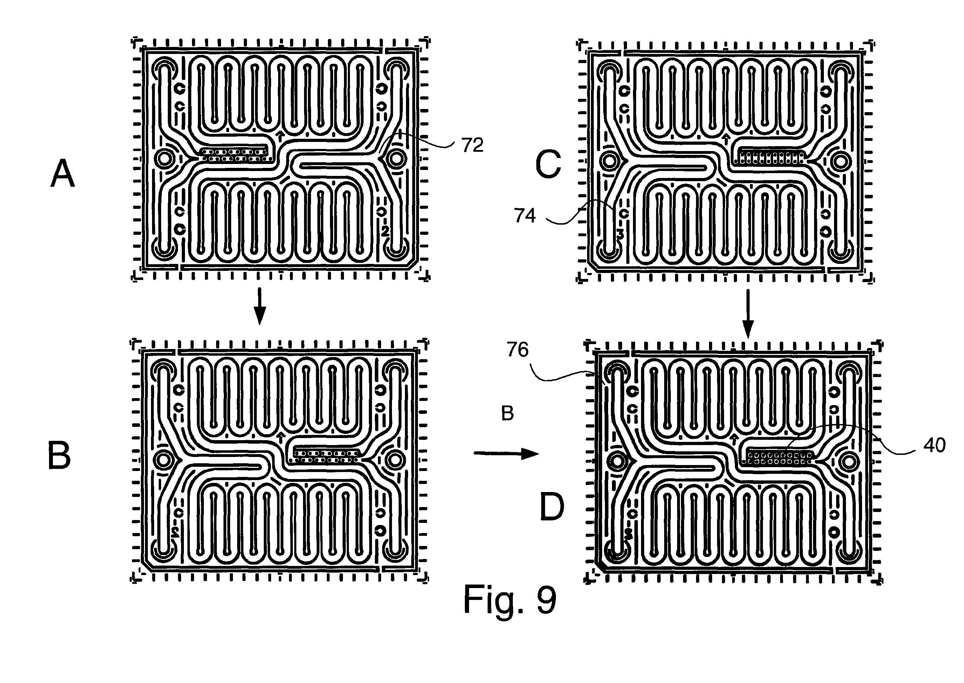

Figure 9 illustrates the assembly of the complementary structures shown in Figures 1 and 8. A first structure 72 of Figure 9A, corresponding to the structure shown in Figure 1 above, is inverted (left to right in the figure) as shown in Figure 9B. Shown in Figure 9C is a second structure 74 corresponding to the structure of Figure 8, upon which the inverted structure 72 of Figure 9B is positioned as shown in Figure 9D. The resulting overlaid structure 76 of Figure 9D is illustrated therein with both layers shown in fully darkened lines, regardless of overlap with the other. Thus one may clearly see the presence of non-matching complementary structures in the area of the mixing sub-passage 40, while other areas have little or no mismatch.

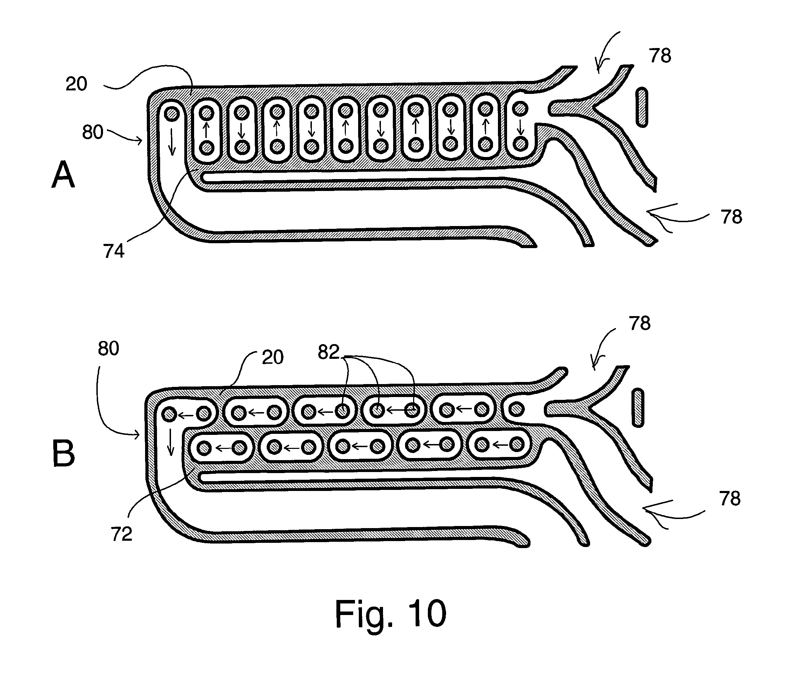

The cross-sectional structure of the fluid passage walls 20 of the mixing sub-passage 40 are shown in greatly enlarged view in Figure 10. Figure 10A shows the structure of the walls 20 corresponding to the complementary structure 74 shown in Figures 8 and 9C, while Figure 10B shows the walls 20 corresponding to the first structure 72 shown in Figures 1 and 9B.

As fluid flows into the mixing sub-passage in the general direction of the arrows 78, the structures 72 and 74 force the fluid to undergo periodic directional changes as indicated by the small arrows 80. As may be seen from the arrows, particularly in the complementary structure 74, which has become the bottom-most structure as represented in Figure 9 after the assembly steps described with respect to Figure 9, the fluid flow direction oscillates strongly. Further, in moving from the structure 72 to the structure 74, back to the structure 72 and so forth, the fluid motion is also oscillating in the "z" direction perpendicular to the plane of Figure 10. The mixing sub-passage can thus be described as three-dimensionally serpentine, having oscillations or undulations in more than one plane. Or, in other words, the mixing sub-passage includes bends or curves lying in more than one plane. By forcing the fluid to change directions frequently and in more than one plane, the mixing sub-passage of the present invention efficiently causes secondary flows and turbulence-like effects, causing significant folding and stretching of fluid interfaces within the sub-passage. Periodic obstacles in the form of pillars 82 also assist in causing secondary flows or turbulence-like effects.

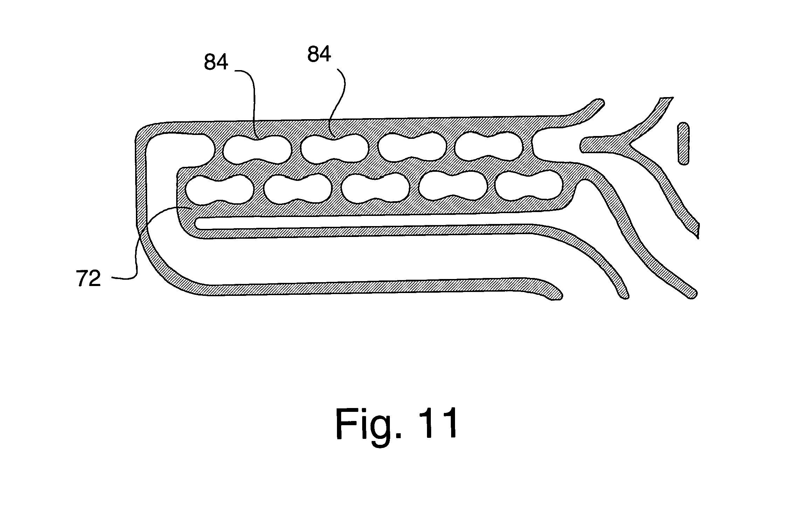

Variations of the mixing sub-passage structure are possible, as shown in Figure 11, for instance, which shows an alternative embodiment for the first structure 72. (The complementary structure 74 can be varied similarly.) Pillars are absent, but channel "waists" 84, periodic reductions of channel width, may be employed help serve a similar function.

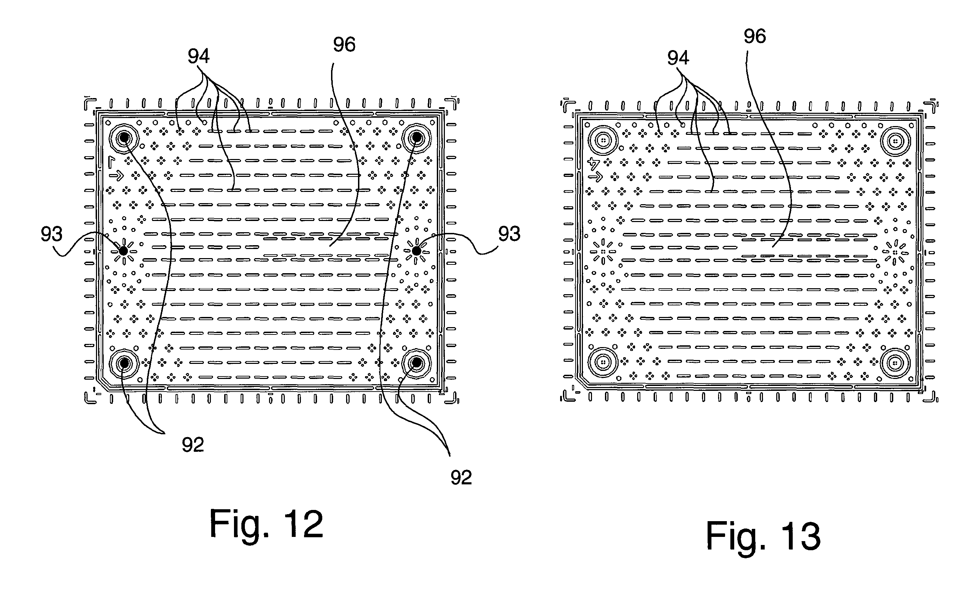

Figures 12 and 13 shows a useful architecture for the support structures 94 of the buffer fluid layers 70 seen in cross section in Figures 6 and 7. The structures 94 are small and evenly dispersed within a relatively large generally planar volume, allowing for very low pressure drop and corresponding high flow rates. Enhanced heat exchange regions 96 sit immediately above and below the mixing sub-passage 40. The regions 96 have an absence of support structures providing for maximum thermal exchange between the buffer fluid and fluid in the mixing sub-passage. In the embodiment shown, buffer fluid flows into both upper and lower buffer fluid passages 70 through buffer fluid input and output ports 93. Buffer fluid reaches the lower passage 70 by passing entirely through the central layers containing the reaction fluid passage(s). Reactants enter and leave the device by passing through holes or ports 92.

A principle characteristic of the devices of the present invention is the use of a unitary mixer or mixing sub-passage, that is, a mixing sub-passage structured such that at least one of the one or more reactant streams must pass through the sub-passage entirely. Such designs avoid splitting the flows of reactants into many separate channels. This provides greater resistance to clogging and better potential for operation with particulates in the fluid stream(s).

Another principle characteristic of the devices of the present invention is the use of a mixing sub-passage which is structured so as to tend to induce secondary flows or turbulence like effects, in the fluid moving through, rather than relying on preserving a predictable, essentially orderly laminar flow regime, such as in the so-called "caterpillar" mixer, and rather than relying principally or exclusively on fine splitting of flows as in most non-unitary mixers. In particular, the inventive device may desirably utilize a three-dimensionally serpentine channel as a mixing sub-passage. For mixing, the device of the present invention relies principally on the physical mixing induced by the mixing sub-passage itself, rather than on precise flow splitting and contacting upstream of the passage, to achieve mixing. In fact, the contacting point is preferably as close to the three-dimensionally serpentine mixing sub-passage as possible.

Relying for mixing performance principally on the three-dimensionally serpentine mixing sub-passage gives the inventive device good performance over its lifetime, even if internal passages are eroded somewhat over time in use. Employing this type of mixer also provides for relative ease of manufacturing by avoiding tight dimensional tolerances necessary for good flow balancing in parallel channels. Employing this type of mixing also aids in the reaction control performance of the device. By effectively not allowing any one fluid stream to remain in the center of the mixing sub-passage for any length of time, the unitary mixer of the present invention provides useful forced convection in the mixing sub-passage.

The secondary-flow-generating mixer of the present invention cooperates with another principle feature of the invention, the presence of one or more relatively large, high-flow buffer fluid passages positioned to be in close contact with the mixing sub-passage. The significant degree of forced convection within the mixing sub-passage, in combination with the high-flow, close-coupled buffer passage(s), allows for improved control of reactions, for instance in the form of improved suppression of undesired secondary or side reactions. In the embodiment described above, a portion of the buffer fluid passage lies directly above and directly below the mixing sub-passage, such that two of the principle surface areas or walls of the mixing sub-passage taken as a whole are shared with the buffer fluid passage. This provides close thermal coupling of the mixing sub-passage and the buffer fluid sub-passage(s), allowing good heat exchange performance even with high reactant flows and a unitary mixer or mixing passage.

Another significant feature of the present invention is the provision of a relative large-volume dwell-time sub-passage so that reactants can remain within the thermally well controlled environment of the single microreaction device for a significantly longer time than in micromixers, and longer than typical microreactors, for a given flow rate.

Some very fast, high throughput micromixers fail to realize expected or desired yield or other performance gains. This can occur, in part, because of inadequate thermal control. In the case of fast exothermic reactions especially, very fast mixing without integrated thermal control can result in undesired side or additional reactions even in the relatively short time required to flow the reactants into a directly coupled heat exchanger. Microreactors, in distinction to micromixers, provide some thermal control by definition, but if the volume within which thermal control is maintained is too small, the reactants will not have adequate dwell time within the thermally regulated environment of the microreactor, and reaction yield and/or selectivity suffers. Accordingly, the devices of the present invention provide desirably at least 1 ml volume of dwell time sub-passage, desirably as high as 2, 5, or even 10 ml or more where the particular desired reaction may benefit from longer residence time.

The dwell-time sub-passage also desirably has a significantly lower pressure-drop to volume ratio, preferably at least two times greater, and more preferably five times or more greater, than that of the mixing sub-passage, such that the needed dwell time is provided without significantly affecting the pressure drop over the device as a whole.

One instance of a reaction that would benefit from such larger-volume dwell-time passages is the saponification of an ester (ethyl acetate) in presence of aqueous NaOH solution: Ethyl acetate + NaOH → Ethyl alcohol + AcONa (sodium acetate). Ethyl acetate and aqueous NaOH solution would be fed at the same flow rate, with ethyl acetate 0.8 mole/l and NaOH solution at 1.0 mole/l. Complete conversion of the ethyl acetate requires a certain amount of time, although the time required decreases with increasing temperature. A device according to the present invention would have desirably 5 ml or more desirably even 10 ml volume in the dwell-time sub-passage for this reaction, such that the reaction could be 90% or more completed within the thermally controlled environment of the device, even with flow rates at 10 or 20 ml/min (for efficient production and good mixing) at achievable temperatures. (Temperatures should generally not be over atmospheric boiling point of one of the reactants or solvents to avoid gas formation and other issues.) For instance, at a dwell-time volume of 10 ml and at a temperature of 80°C, the entering Ethyl acetate can be 90% converted within the device at flow rates up to about 20 ml/min, a flow rate sufficient to ensure good mixing in the tested examples described herein.

The devices of the present invention also preferably provide some reasonable amount of volume, desirably at least 0.1-0.5 ml or more in each of the pre-mixing sub-passages 30, and have such passages also closely coupled to the buffer fluid passage or to a buffer fluid passage. For many reactions, like the saponification of ethyl acetate described above, it is desirable that reactants begin the reaction at temperatures above or below the typical reactant storage temperature, and the pre-mixing sub-passages can be used together with the associated buffer fluid passage(s) to bring the reactants up or down to a desired temperature before contacting or mixing them.

A further desirable feature that may be included in devices of the present invention is shown in the shapes of the fluid passage walls 20 of Figure 1: between neighboring portions of the reactant fluid passage 22, each such passage has its own individual walls, not shared with another portion of the fluid passage 22. Walls of neighboring portions of the fluid passage 22 are separated by a gap 23, desirably an air gap. This feature tends to result in an anisotropic thermal conductivity in the device as a whole when in use, with thermal energy traveling more easily in the vertical direction in Figures 6 and 7 than in the horizontal direction of the plane of Figure 1. Combined with the desirable use of moderately thermally conductive material such as glass or glass-ceramic materials to form the structure of the device, this feature helps prevent any hot or cold spots that may develop in the fluid passage 22 from affecting other portions of the fluid passage 22, and helps ensure that heat flow is primarily in the direction into (or out from) the buffer fluid passage(s) 70, which share common walls with the fluid passage 22 in the form of generally planar structures 60. Safety may also be improved as any breaches of the walls 20 will be to the exterior of the device and thus will be easily detectable, and will not result in cross-contamination of reactant or product streams.

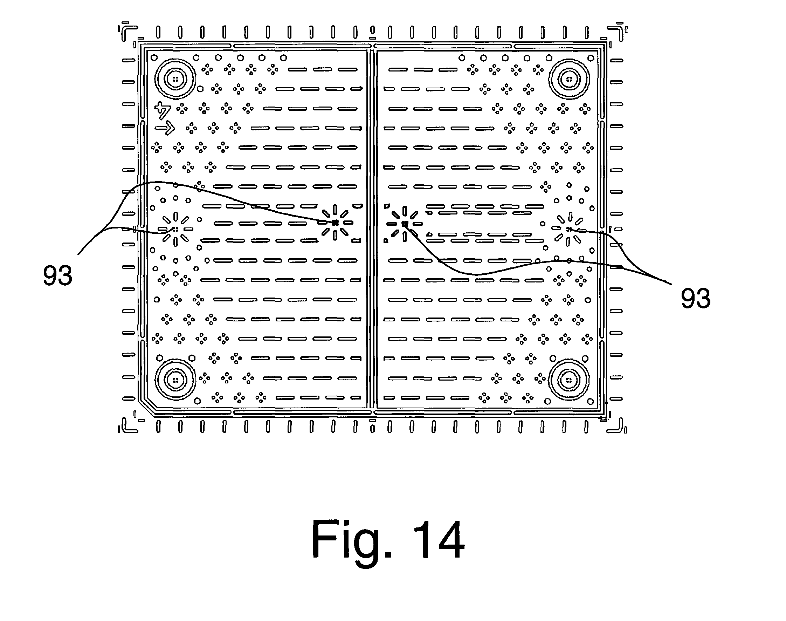

If desired, the buffer fluid passages 70 may also be segmented, dividing up the generally planar volume into neighboring generally co-planar volumes, as shown for instance in Figure 14, which depicts an alternate version of the structure shown in Figure 13 having two buffer fluid passages instead of one. Access to such divided buffer fluid passages could be provided from both opposing sides of the generally planar microreaction device, such as at the locations 93. Such structure could be used to more fully pre-heat pre-mixing reactants while more thoroughly cooling the mixing and/or post-mixing reactant stream, for instance.

Another desirable feature of the present invention is the generally low aspect ratio of the reactant fluid passages 22 overall. In the embodiment of Figure 1, the passages 22 are shown roughly to scale in their dimensions in the plane of the figure, with plane-of-figure dimensions in the mixing sub-passage generally in the 0.5 to 1 mm range, and in the dwell-time sub-passage generally in the 3-5 mm range. In the direction perpendicular to the plane of the figure, the passage(s) 22 have dimensions preferably in the range of .5 to 1 mm in the non-mixing subsections. The total volume of the passages 22 is about 5.3 ml, but is provided within a larger enclosing volume between planar structures 60 that is generally only about 0.5 to 1 mm high, while having an area within the plane of Figure 1 of about 120 x 150 mm². The ratio between the typical greatest height of this volume, 1mm, and the next smallest dimension is thus on the order of 1:100 at 1:120. This low aspect ratio of the passages 22 taken as a whole, or of this volume in which passages 22 are confined, together with the buffer fluid passage(s) on both sides, helps ensure good thermal control of the device.

### Examples

A testing method used to quantify mixing quality of two miscible liquids is described in Villermaux J., et al. "Use of Parallel Competing Reactions to Characterize Micro Mixing Efficiency," AlChE Symp. Ser. 88 (1991) 6, p. 286. For testing generally as described herein, the process was to prepare, at room temperature, a solution of acid chloride and a solution of potassium acetate mixed with KI (Potassium Iodide). Both of these fluids or reactants were then continuously injected by means of a syringe pump or peristaltic pump into the micromixer or microreactor to be tested.

The resulting test reaction results in two competing reactions of different speeds―a "fast" reaction that produces a UV absorbing end product, and an "ultrafast" one that dominates under ultrafast mixing conditions, producing a transparent solution. Mixing performance is thus correlated to UV transmission, with theoretically perfect or 100% fast mixing yielding 100% UV transmission in the resulting product.

The fluid flowing out from the device under test was passed through a flow-through cell or cuvette (10µliters) where quantification was made by transmission measurement at 350nm.

Pressure drop data discussed herein was acquired using water at 22°C and peristaltic pumps. The total flow rate is measured at the outlet of the mixer or reactor. A pressure transducer was used to measure the upstream absolute pressure value, while the outlet of the micromixer or microreactor was open to atmospheric pressure.

### Performance Example I: Mixing Performance, Pressure Drop and Dwell Time

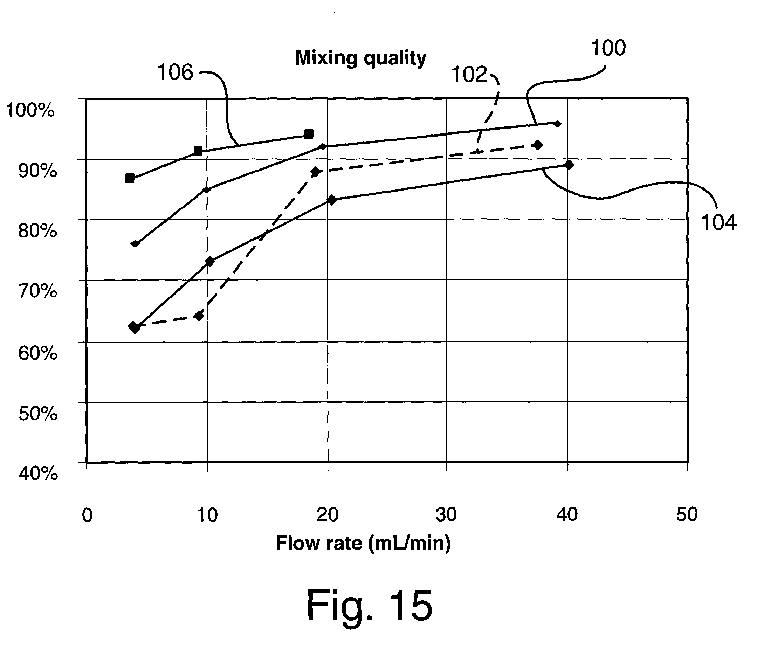

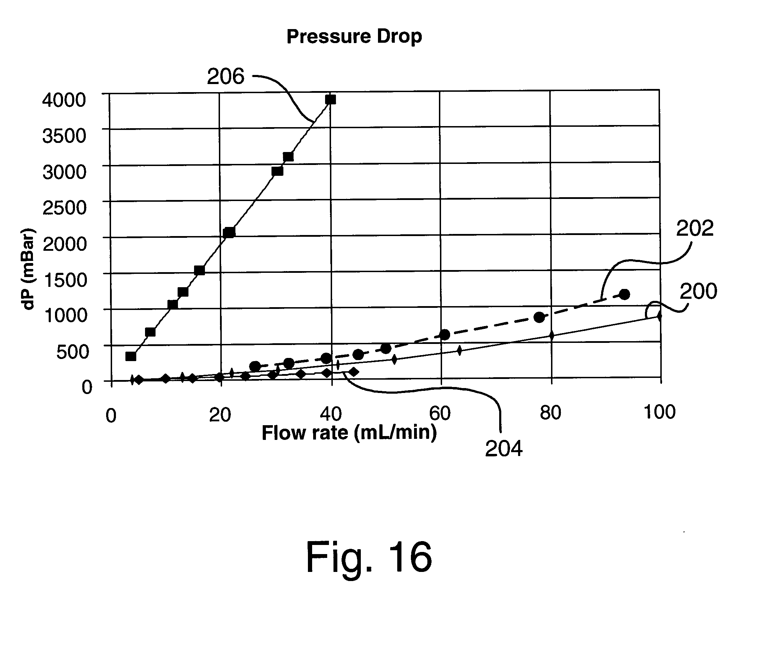

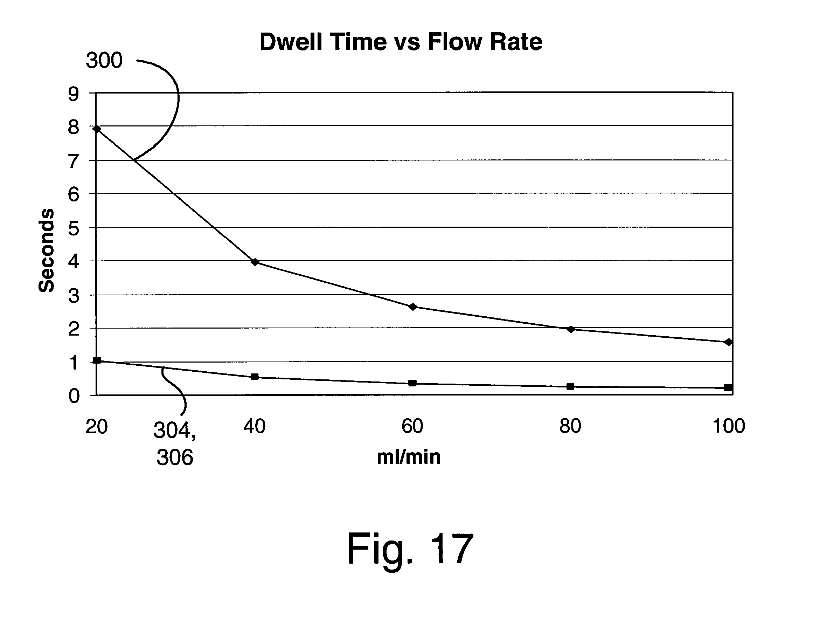

Mixing tests performed as described above were made on nine different samples of the embodiment of the present invention shown in Figures 1-5, 8-10, 12 and 13 above. Average fast mixing performance as a function of flow rate is shown by the data 100 plotted in the graph in Figure 15, and average pressure drop as a function of flow rate is shown by the data 200 plotted in the graph in Figure 16. Fast mixing resulting in 90% measured mixing performance or greater is present from a range of flow rates beginning just below 20 ml/min and upward, corresponding to a minimum pressure drop of slightly less than 90mBar. Residence times or "dwell times" as function of flow rate are plotted as data 300 in Figure 17.

### Comparative Example A

An optimized generally planar-configured multilamination mixer with hydrodyamic focusing, formed in glass and essentially similar to the device reported in AIChE J. 49, 3 (2003) 566-584 cited above, was tested as described above. Fast mixing performance is shown by the data 102 represented in the graph in Figure 15, and pressure drop performance for the same device is shown by the data 202 represented in the graph in Figure 16. The hatched lines are used to distinguish this example device which is a "mixer" only, as that term is used herein, and not a microreactor.

Surprisingly, fast mixing performance of the inventive microreaction device for miscible liquids surpasses that of the device of Comparative Example A, a device that is designed for fast mixing alone without providing for temperature control or dwell time functions as does the inventive device. Tested embodiments of the present invention provide better mixing, performance for any given flow rate, than the Comparison Example A device. Moreover, the better mixing achieved by the inventive device is not offset by increased pressure drop. Instead, pressure drop performance of the inventive device is also improved (i.e. lower) compared to the interdigitating mixer of Example A. Achievable throughput in the inventive device is also better, given the lower pressure drop. Mixing of better than 90% is achieved in the Comparison Example A device at a flow rate range from about 30 ml/min and upward, corresponding to a minimum pressure drop in excess of 200 mBar, over twice the minimum pressure drop for the same mixing performance in the embodiment of the present invention described above.

### Comparative Example B

A microreaction device formed in glass, utilizing multiple mixing "tees" in parallel as described in Marioth et al., supra, was also tested as described above. Mixing performance results are shown as data 104 in Figure 15, while pressure drop performance results are as data 204 in Figure 16.

Fast mixing of about 89% is achieved in the Comparison Example B device at a flow rate of 40 ml/min, corresponding to a pressure drop of about 92 mBar, slightly greater then the pressure drop at which the inventive device already achieves 90% mixing. Markedly different from the inventive device is the dwell time provided by the Comparison Example B device, represented by the data 304 in Figure 17. The Comparison Example B device provides only about one-eighth the dwell time of the embodiment of the present invention described above. The flow rate of 40 ml/min required to approach 90% mixing in the Comparative Example B makes residence times so short (< 1 sec) that completion of many reactions could not even be approached within the confines of the device, let alone within the thermally buffered portions of the device, leading to potential loss of thermal control as reactants pass through a non-thermally buffered collection passage and out through a fluid coupling.

### Comparative Example C

A microreaction device formed in high- corrosion-resistance stainless steel, similar to the device described in Richter, et al., "Metallic Microreactors: Components and Integrated Systems," Proceedings of IMRET 2, 146-151 AlChe Meeting, New Orleans, USA, 1998, was also tested as described above. Mixing performance results are shown by the data 106 in Figure 15, while pressure drop performance results are shown by the data 206 in Figure 16. Dwell time for the Comparative Example C device is represented by data 306 in Figure 17 and is, coincidentally, the same as that for Comparative Example B.

As may be seen from the figures, fast mixing of better than 90% is achieved in the Comparison Example C device at a flow rate range from about 7.5 ml/min and upward, corresponding to a minimum pressure drop of about 730 mBar, over eight times the minimum pressure drop for the same fast mixing performance in the embodiment of the present invention described above.

### Performance Example II: Repeatability and Durability of Mixing

Fast mixing tests performed as described above were made at 20 ml per minute flow rate on nine different samples of the embodiment of the present invention shown in Figures 1-10, 12 and 13, and the range of values was compared. Transmission percentage results ranged from 93 to 95% at 20 ml/min. flows. Repeatability in the same device was also very good at ±1 %.

Samples of devices according to the present invention, formed in glass according to the process referenced above, were also subjected to alkaline corrosion by flowing1N (1M) NaOH solution at 95° C through the reactant passage(s) at 20ml/min. Pressure drop as a function of flow rate, total internal volume, and mixing performance were tested after 0, 100, 200 and 300 hours of such corrosion. After 300 hours of corrosion, internal volume increased by about 30% and pressure drop was reduced by half. Mixing performance, however, remained essentially stable over the duration of the corrosion testing, as shown in the graph of Figure 17, which shows tested fast mixing performance as a function of flow rate at 0, 100, 200 and 300 hours of corrosion.

This durability or stability of the mixing performance is an improvement relative to typical microreactors having non-unitary mixers―mixers that split the reactant flow into multiple streams and depend on such splitting and the even balance thereof, for preserving desired stoichiometries locally during mixing. Some instability or variation of mixing performance for such devices has been observed in testing by the present inventors, which variation is attributed to the variation in the division of flows among the multiple channels that may arise, particularly at lower flow rates. Such variation will only tend to be worsened by corrosion or other erosive aging effects, since channels experiencing greater flow will also experience greater erosion, leading to still greater flow imbalances and an accelerating deterioration of mixing performance.

The good mixing performance after significant corrosion of the inventive device also demonstrates that internal features of the inventive devices offer a degree of scalability to higher volumes, even beyond the presently relatively large dimensions for microreaction devices, with higher throughput and lower pressure drop, while preserving essentially equal mixing quality.

### Performance Example III: Particulate Handling

Silicon carbide particles were dispersed in water and flowed through reactant passages of the type disclosed herein as a test of capability to convey inert particles. Particles of three different mean sizes were tested: 13, 37, and 105µm, all with typical length to width aspect ratio of 2:1 to 3:1. At a flow rate of 18ml/min, no clogging or change in pressure drop was observed for 13 and 37µm particles at particle loads of up to 300g/l. 105µm particles were tested at concentrations of 25 and 50g/l, with no clogging at 25g/l. At 50g/l clogging was observed after a few minutes.

Potassium permanganate was reduced, in reactant passages of the type disclosed herein, as a test of capability to convey precipitates (MnO₂) with affinity for glass, the material of which the reactant passages were formed. Effective resulting particle sizes were 8-10µm when resulting precipitating particles remained generally discrete and 10-100µm when agglomeration was observed, at concentrations of 44g/l. In either case, no clogging was observed within the 15 minutes duration of the experiment.

### Comparative Example D

The device of Comparative Example B above was tested with silicon carbide particles of 105µm size at particle loads of 5, 10 and 50g/l. The 5 and 50g/l fluids were fed at a rate of 18ml/min., while the 10g/l fluid was fed 50% faster at 27ml/min. Although each of the multiple parallel mixing passages in the device of Comparative Example B is of the same general cross sectional size as the unitary mixing passage in the tested inventive device, clogging occurred under all three test conditions in the device of Example B. Clogging occurred most often in the passage or chamber immediately upstream of the multiple parallel mixing passages of this device. Although the devices of Comparative Examples A and C were not subjected to particulates testing, both devices have multiple passages in parallel, and of significantly lesser cross-section, than has the clog-prone device of Comparative Example B. Under the same test conditions, clogging of the devices of Examples A and C would be expected.

### Performance Example IV: Measured Heat Exchange

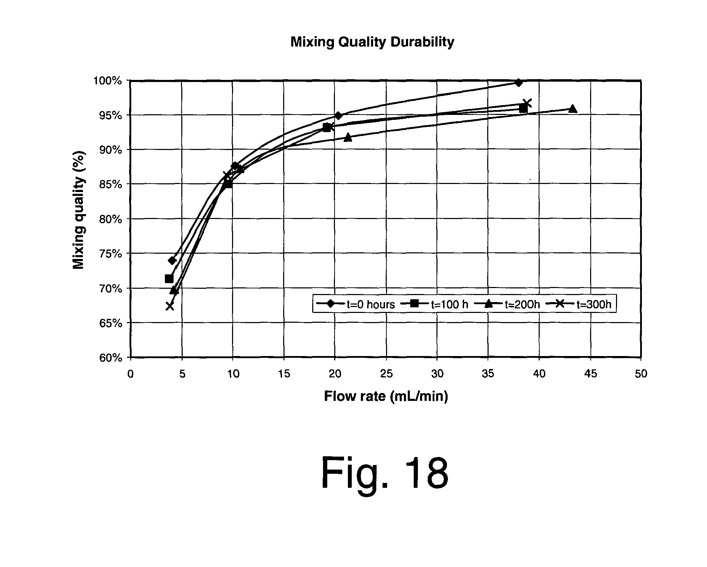

Water-water experiments were performed (with the hot fluid flowing in the thermal buffer fluid passages or layers and the cold fluid flowing in the reactive passage(s)), at a temperature differential of 60°C. The heat exchange power was calculated from the temperature increase of the fluid passing through the reactant passage(s). Data are shown in Figure 18 for two different flow rates in the buffer passages: 270ml/min for the lower curve 308 and 610 ml/min for the upper curve 310. As shown in the figure, 150W of power was transferred to the reactant passage fluid at just over 100ml/min reactant flow rate. At 1 liter/min flow in the buffer fluid layers and 100 ml/minute in the reactant passages, 165W of power was transferred.

### Performance Example V: Reaction Control

Tests have shown devices of the type according to the present invention to be able to control exothermic reactions of interest. For instance, a phenol solution of 23.5 wt % phenol and 6.1 wt % acetic acid in 70.4 wt% water was flowed into one port of a device according to the present invention at 15.76g/min (13.13 l/min), while a nitric acid solution of 65 wt % nitric acid was flowed into the other port at 6.76 g/min (6.63 ml/min) for a total input rate of 22.53g/min (or 19.75 ml/min), with both reactants essentially at room temperature. Water was input to the buffer fluid passage at 60°C at a flow rate of 150 or 200ml/min. The results were both that the incoming reactants both received sufficient energy from the buffer fluid to begin autocatalytic nitration of phenol essentially immediately upon contact of the reactants, and that the reactant products were kept to less than a 10°C rise after beginning the reaction. Good yield of approximately 70% or more was also observed.

## Claims

1. A microfluidic device comprising:
an extended body;
a reactant fluid passage defined in said extended body, said reactant fluid passage having one or more input ports for receiving fluid into said reactant fluid passage, a mixing sub-passage, and a dwell-time sub-passage, said mixing sub-passage having a pressure-drop to volume ratio, for a given fluid and flow rate, greater than a pressure-drop to volume ratio of said dwell-time sub-passage, for said given fluid and flow rate; and
one or more thermal buffer fluid passages defined in said extended body;
wherein said reactant fluid passage and said mixing sub-passage thereof are positioned and arranged such that all fluid passing through at least one of said one or more input ports passes through said mixing sub-passage, and wherein said dwell-time sub-passage has a volume of at least 1 milliliter.

2. The microfluidic device according to claim 1 wherein said dwell-time sub-passage has a volume of at least 2 milliliters.

3. The microfluidic device according to claim 1 wherein said dwell-time sub-passage has a volume of at least 5 milliliters.

4. The microfluidic device according to any of claims 1- 3 wherein said extended body comprises a glass, glass-ceramic, or ceramic material.

5. The microfluidic device according to any of claims 1- 3 wherein said extended body comprises a glass or glass-ceramic material.

6. The microfluidic device according to any of claims 1-5 wherein said mixing sub-passage is arranged to as to induce secondary flows in fluids flowed therethrough.

7. The microfluidic device according to any of claims 1-6 wherein said mixing sub-passage comprises a passage having bends therein, with said bends lying in more than one plane.

8. The microfluidic device according to any of claims 1-7 wherein the reactant passage has sufficient flow capacity to flow at least 100m1/min of water at a pressure drop of 2 bar, at least one of the one or more thermal buffer passages has flow capacity at least twice as great as said reactant passage, and the at least one thermal buffer passage is closely thermally coupled with said mixing sub-passage by sharing one or more common walls.

9. The microfluidic device according to any of claims 1-8 wherein the reactant passage has sufficient flow capacity to flow at least 100ml/min of water at a pressure drop of 1 bar.

10. The microfluidic device accordingly to any of claims 1-9 wherein one of the one or more thermal buffer passages has a flow capacity at least five times as great as said reactant passage.

11. The microfluidic device according to any of claims 1-10 wherein the one or more thermal buffer passages are closely thermally coupled with said mixing sub-passage by sharing two or more common walls.
